## Europäisches Patentamt

## European Patent Office

## Office européen des brevets

(19)

(11) Veröffentlichungsnummer: **0 114 690**
**B1**

(12) **EUROPÄISCHE PATENTSCHRIFT**

(45) Veröffentlichungstag der Patentschrift:
**04.10.89**

(21) Anmeldenummer: **84100611.7**

(22) Anmeldetag: **20.01.84**

(51) Int. Cl.⁴: **G 11 B 5/008,** G 11 B 5/012,
G 11 B 5/09 //
G11B15/44, G11B19/26

(54) **Magnetschichtspeicher.**

(30) Priorität: **25.01.83 DE 3302366**

(43) Veröffentlichungstag der Anmeldung:
**01.08.84 Patentblatt 84/31**

(45) Bekanntmachung des Hinweises auf die Patenterteilung:
**04.10.89 Patentblatt 89/40**

(84) Benannte Vertragsstaaten:
**DE FR GB**

(56) Entgegenhaltungen:
**DE-A-3 018 602**
**US-A-4 382 268**

**IBM TECHNICAL DISCLOSURE BULLETIN, Band 19,
Nr. 12, Mai 1977, Seiten 4508-4509, New York, US; J.
BAPPERT et al.: "Automatic recorder calibration"**

(73) Patentinhaber: **Siemens Aktiengesellschaft,
Wittelsbacherplatz 2, D-8000 München 2 (DE)**

(72) Erfinder: **Gottwald, Winfried, Dipl.- Ing.,
Lilienstrasse 7, D-8033 Krailling (DE)**

EP 0 114 690 B1

LIBER, STOCKHOLM 1989

## Beschreibung

Die Erfindung bezieht sich auf einen Magnetschichtspeicher entsprechend dem Oberbegriff des Patentanspruchs 1.

Es ist allgemein bekannt, zur Speicherung von digitalen Daten Magnetschichtspeicher zu verwenden. Derartige Magnetschichtspeicher sind hauptsächlich Magnetbandspeicher, Plattenspeicher oder Magnetkartenspeicher. Für die Speicherung der digitalen Daten ist eine Relativgeschwindigkeit zwischen einem mit einer Magnetschicht versehenen Aufzeichnungsträger und einem Magnetkopf erforderlich. Die Aufzeichnung der digitalen Daten erfolgt unter Verwendung von allgemein bekannten Aufzeichnungsverfahren, wie beispielsweise dem PE (Phase Encoding)-Verfahren oder dem GCR (Group Coded Recording)-Verfahren. Weitere bekannte Verfahren sind das MFM-Verfahren und das NRZ-Verfahren.

In Abhängigkeit vom verwendeten Aufzeichnungsverfahren wird auch eine unterschiedliche Zeichendichte verwendet. Bei Magnetbandgeräten werden beispielsweise bei der Verwendung des PE-Verfahrens die Daten mit einer Zeichendichte von 63 Zeichen/mm Bandlänge (Z/mm) aufgezeichnet und bei der Verwendung des GCR-Verfahrens mit einer Zeichendichte von 246 Z/mm Bandlänge.

Die Relativgeschwindigkeit zwischen dem Aufzeichnungsträger und dem Magnetkopf ist üblicherweise unabhängig von der Zeichendichte. Dies hat zur Folge, daß sich entsprechend der Zeichendichte die Übertragungsgeschwindigkeit der Daten von und zum Magnetbandgerät in Abhängigkeit von der Zeichendichte verändert.

Beispielsweise ergibt sich in einem Magnetbandgerät bei einer Bandgeschwindigkeit von 0,635 m/s bei einer Aufzeichnung nach dem GCR-Verfahren mit der Zeichendichte von 246 Z/mm eine nominale Übertragungsgeschwindigkeit von 156,25 kBit/s. Bei der Aufzeichnung nach dem PE-Verfahren mit 63 Z/mm ergibt sich eine Datentransferrate von 40 kBit/s. Die Datentransferraten unterscheiden sich somit um den Faktor 3,91. Die zum Aufzeichnen und Wiedergeben der Daten erforderlichen Schreibeinheiten und Leseeinheiten müssen folglich sehr breitbandig ausgelegt sein. Insbesondere müssen die Leseeinheiten, die häufig Filter und Synchronisiereinrichtungen aufweisen, entweder sehr breitbandig ausgebildet sein oder auf die unterschiedlichen Übertragungsgeschwindigkeiten einstellbar sein. Dies hat einen verhältnismäßig großen Aufwand zur Folge. Weiterhin hat eine derartige Anordnung den Nachteil, daß bei einer niedrigen Zeichendichte der Übertragungskanal zwischen dem Magnetschichtspeicher und einer zentralen Recheneinheit nicht ausgelastet ist und es damit in der zentralen Recheneinheit zu unnötig langen Programmlaufzeiten kommt.

Der vorliegenden Erfindung liegt daher die Aufgabe zugrunde, einen Magnetschichtspeicher anzugeben, der unabhängig von der Zeichendichte sowohl bei der Aufzeichnung als auch bei der Wiedergabe möglichst immer eine zumindest angenähert gleiche Übertragungsgeschwindigkeit der Daten aufweist.

Erfindungsgemäß wird die Aufgabe bei dem Magnetschichtspeicher der eingangs genannten Art durch die im kennzeichnenden Teil des Patentanspruchs 1 angegebenen Merkmale gelöst.

Der Magnetschichtspeicher gemäß der Erfindung hat den Vorteil, daß durch das Erhöhen der Relativgeschwindigkeit bei einer niedrigen Zeichendichte der Übertragungskanal immer bestmöglich ausgenutzt ist und daß somit die Programmlaufzeit in einer angeschlossenen zentralen Recheneinheit verkürzt wird. Die Leseeinheiten und die zugehörigen Auswertestufen können schmalbandig ausgelegt sein. Eine Umschaltung der Frequenzbereiche für gegebenenfalls vorgesehene Filter oder Synchronisiereinheiten ist nicht oder nur in geringen Grenzen erforderlich. Für die Gerätesteuerung ist nur ein geringfügiger zusätzlicher Aufwand erforderlich, so daß ein mit den Merkmalen der Erfindung ausgestatteter Magnetschichtspeicher ohne wesentliche Mehrkosten hergestellt werden kann.

Als Magnetschichtspeicher ist insbesondere ein Magnetbandgerät vorgesehen, dessen Bandgeschwindigkeiten in Abhängigkeit von der Zeichendichte umschaltbar sind. Der Magnetschichtspeicher kann jedoch auch als Plattenspeicher, insbesondere als Floppydiskspeicher ausgebildet sein, bei dem die Rotationsgeschwindigkeit der Magnetplatte in Abhängigkeit von der Aufzeichnungsdichte umschaltbar ist.

Weiterbildungen der Erfindung ergeben sich aus den Unteransprüchen.

Im folgenden wird ein Ausführungsbeispiel des Magnetschichtspeichers gemäß der Erfindung anhand einer Zeichnung näher erläutert.

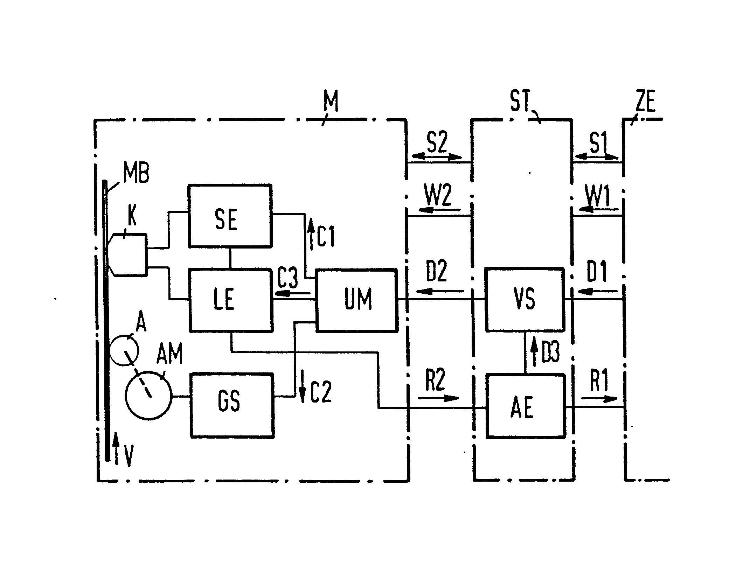

Die Figur zeigt ein Blockschaltbild eines über eine Steuereinheit an einer zentralen Recheneinheit angeschlossenen Magnetschichtspeichers.

Der in der Figur dargestellte Magnetschichtspeicher ist als Magnetbandgerät M ausgebildet, das über eine Steuereinheit ST an einer zentralen Recheneinheit ZE angeschlossen ist. Das Magnetbandgerät M enthält als magnetischen Aufzeichnungsträger ein Magnetband MB, auf das unter Verwendung eines in einem Magnetkopf K angeordneten Schreibkopfs Daten aufgezeichnet werden können. Mittels eines Lesekopfs im Magnetkopf K können auch aufgezeichnete Daten vom Magnetband MB gelesen werden. Die Relativgeschwindigkeit V zwischen dem Magnetband MB und dem Magnetkopf K wird unter Verwendung einer Antriebsrolle A erzeugt, die von einem Antriebsmotor AM angetrieben wird.

Das Magnetbandgerät M enthält eine Gerätesteuerung GS, die die Ausführung aller durchzuführenden Funktionen steuert und die auch eine Motorsteuerung für den Antriebsmotor AM enthält. Weiterhin enthält das Magnetbandgerät M eine Schreibeinheit SE, die insbesondere einen Schreibverstärker enthält, der beim Aufzeichnen von Daten auf das Magnetband MB an den Magnetkopf K entsprechend dem jeweils verwendeten Aufzeichnungsverfahren und der jeweils verwendeten Zeichendichte Schreibsignale abgibt. Beim Lesen von Daten gibt der Magnetkopf K Lesesignale an eine Leseeinheit LE ab, die diese Lesesignale verstärkt und entzerrt. Die vom Magnetbandgerät M auszuführenden Funktionen werden durch die Steuereinheit ST gesteuert, die ihrerseits durch die zentrale Recheneinheit ZE gesteuert wird. Zwischen der zentralen Recheneinheit ZE und der Steuereinheit ST bzw. zwischen der Steuereinheit ST und dem Magnetbandgerät M werden daher Steuersignale S1 bzw. S2 und als Datensignale Schreibsignal W1 bzw. W2 und Lesesignale R1 bzw. R2 übertragen.

Die zentrale Recheneinheit ZE gibt außerdem als Steuersignal ein Signal D1 an die Steuereinheit ST ab, um dem Magnetbandgerät M beim Aufzeichnen von Daten das zu verwendende Aufzeichnungsverfahren und damit die Zeichendichte mitzuteilen. Dieses Signal gelangt als Steuersignal D2 an das Magnetbandgerät M. Dort wird es einer Umschalteinheit UM zugeführt. Diese Umschalteinheit UM gibt an die Schreibeinheit SE ein Signal C1 ab, das diese auf das gewünschte Aufzeichnungsverfahren einstellt. Außerdem gibt die Umschalteinheit UM an die Gerätesteuerung GS ein Signal C2 ab, das dort eine der Zeichendichte zugeordnete Bandgeschwindigkeit einstellt, mit der der Antriebsmotor AM über die Antriebsrolle A das Magnetband MB bewegt.

Bei Magnetbandgeräten sind Bandgeschwindigkeiten von 0,635 m/s (25 Zoll/s), 0,953 m/s (37,5 Zoll/s) und ganzzahlige Vielfache davon üblich. Als Zeichendichten in Abhängigkeit der verschiedenen Aufzeichnungsverfahren sind gegenwärtig 32/mm (1600 Bit/Zoll) und 246 Z/mm (6250 Bit/ Zoll) üblich. Wird nun durch das Signal D1 beispielsweise eine Zeichendichte von 246 Z/mm eingestellt, so ergibt sich bei einer Bandgeschwindigkeit von 0,635 m/s eine Datenübertragungsgeschwindigkeit von 156,25 kBit/s. Würde die Bandgeschwindigkeit V unverändert bleiben, so ergäbe sich bei einer Zeichendichte von 63 Z/mm eine Übertragungsgeschwindigkeit von 40 kBit/s. Im Magnetbandgerät M wird jedoch unter Verwendung des Signals C2 die Bandgeschwindigkeit bei der Zeichendichte 63 Z/mm auf 1,905 m/s (75 Zoll/s) erhöht, so daß sich eine Übertragungsgeschwindigkeit von 120 kBit/s ergibt. Die Übertragungsgeschwindigkeiten unterscheiden sich somit in Abhängigkeit von der Zeichendichte nicht mehr um den Faktor 3,91, sondern nur noch um den Faktor 1,3. Es ist auch möglich, bei der Zeichendichte von 63 Z/mm die Bandgeschwindigkeit auf 2,54 m/s (100 Zoll/s) zu erhöhen. In diesem Fall beträgt die Datenübertragungsrate 160 kBit/s, so daß sich die Übertragungsgeschwindigkeiten sich nur noch um den Faktor 1,024 unterscheiden. Grundsätzlich ist es auch denkbar, die Bandgeschwindigkeit auf 2,48 m/s einzustellen, so daß in beiden Fällen genau die gleiche Übertragungsgeschwindigkeit erreicht wird.

In der Gerätesteuerung GS ist nur ein geringer Mehraufwand erforderlich, um in dem Magnetbandgerät M eine zweite Bandgeschwindigkeit oder weitere Bandgeschwindigkeiten einzustellen. Lediglich der Sollwertgeber für die Bandgeschwindigkeit muß in diesem Fall verändert werden. Voraussetzung ist natürlich, daß die Länge der üblicherweise vorgesehenen Pufferkammern ausreicht. In der Schreibeinheit SE werden durch das Signal C1 in an sich bekannter Weise unterschiedliche, dem jeweils verwendeten Schreibverfahren, bzw. der entsprechenden Zeichendichte, zugeordnete Schreibströme für den Schreibkopf im Magnetkopf K eingeschaltet. Die Codierung der Daten entsprechend dem verwendeten Aufzeichnungsverfahren kann in der Steuereinheit ST oder im Magnetbandgerät M erfolgen. Selbstverständlich wird in diesem Fall mit dem Signal C1 bzw. mit dem Signal D1 die Codiereinrichtung entsprechend umgeschaltet, wie es bei bekannten Magnetbandgeräten bereits erfolgt.

Beim Lesen von Daten vom Magnetband MB stellt die Gerätesteuerung GS zunächst eine Bandgeschwindigkeit V ein, die beispielsweise der höheren Zeichendichte zugeordnet ist. Über die Leseeinheit LE gelangen Lesesignale R2 zu einer Auswerteeinheit AE in der Magnetbandsteuerung ST. Am Anfang des Magnetbands MB stellen diese Lesesignale R2 eine Kennung dar, die angibt, mit welchem Aufzeichnungsverfahren das Magnetband MB beschrieben wurde. Die Auswerteeinheit AE erkennt diese Kennung und gibt ein entsprechendes Signal D3 über die Verknüpfungsstufe VS, die entsprechend einem ODER-Glied ausgebildet ist, an die Umschalteinheit UM ab. Wenn die Auswerteeinheit AE die höhere Zeichendichte erkennt, bleibt die Bandgeschwindigkeit unverändert. Anderenfalls wird durch das Signal C2 eine höhere Bandgeschwindigkeit V eingestellt, so daß auch beim Lesen der aufgezeichneten Daten unabhängig von der Zeichendichte die Übertragungsgeschwindigkeiten möglichst gleich sind. Die Leseeinheit LE braucht im allgemeinen nicht umgestellt zu werden, da die Übertragungsgeschwindigkeit und damit die Frequenzen einander angenähert sind oder völlig übereinstimmen, so daß Filter in der Leseeinheit LE und gegebenenfalls vorgesehene Synchronisiereinrichtungen unabhängig von der Zeichendichte verwendet werden können. Gegebenenfalls kann auch eine Umschaltung der Leseeinheiten LE durch ein Signal C3 erfolgen, wenn beispielsweise die Übertragungsgeschwindigkeiten um mehr als 50 % voneinander abweichen, oder eine Veränderung der Verstärkung notwendig erscheint.

Durch die Umschaltung der Bandgeschwindigkeit V in Abhängigkeit von der Zeichendichte wird erreicht, daß die Übertragungsgeschwindigkeiten der auf das Magnetband MB aufzuzeichnenden Daten D1 sowie der vom Magnetband MB gelesenen Daten R1 annähernd gleich oder völlig gleich sind, unabhängig davon, welche Zeichendichte benutzt wird. Auf diese Weise wird somit der Übertragungskanal zwischen der zentralen Recheneinheit ZE und der Steuereinheit ST sowie zwischen der Steuereinheit ST und dem Magnetbandgerät M optimal ausgenutzt. Die Bandgeschwindigkeit kann selbstverständlich in Abhängigkeit von der Zeichendichte zwischen mehr als zwei Werten umgeschaltet werden, so daß das Magnetbandgerät M beispielsweise außer den Daten, die nach dem GCR-Verfahren und dem PE-Verfahren aufgezeichnet werden, auch Daten aufzeichnen und wiedergeben kann, die nach dem NRZ-Verfahren aufgezeichnet werden bzw. aufgezeichnet sind. Es ist auch denkbar, die Daten bei gleichem Aufzeichnungsverfahren in mehreren Zeichendichten aufzuzeichnen.

In entsprechender Weise, wie bei einem Magnetbandgerät die Bandgeschwindigkeit V umgeschaltet wird, wird bei einem als Magnetschichtspeicher verwendeten Plattenspeicher die Umdrehungszahl der Magnetplatte in Abhängigkeit von der Zeichendichte derart umgeschaltet, daß die Übertragungsgeschwindigkeiten der Daten möglichst angenähert oder völlig gleich sind.

## Patentansprüche

1. Steuereinrichtung für einen Magnetschichtspeicher (M), bei dem digitale Daten (z. B. W2) unter Verwendung einer Schreibeinheit (SE) mit unterschiedlichen Zeichendichten auf einem bewegten magnetischen Aufzeichnungsträger (MB) speicherbar sind bzw. die Daten (z. B. R2) unter Verwendung einer Leseeinheit (LE) vom Aufzeichnungsträger gelesen werden, wobei zum Einleiten von Schreib- bzw. Lesevorgängen unter anderem die Zeichendichte kennzeichnende Steuerdaten (D1, D2 bzw. D3) übertragen werden und bei dem eine Gerätesteuerung (GS) vorgesehen ist, die mindestens einen Antriebsmotor (AM) ansteuert, der den Aufzeichnungsträger relativ zu einem Magnetkopf (K) bewegt, gekennzeichnet durch eine Umschalteinheit (UM), die bei Einleitung von Lese- bzw. Schreibvorgängen selbsttätig in Abhängigkeit von den die Zeichendichte kennzeichnenden Steuerdaten unter Verwendung der Gerätesteuerung (GS) eine Relativgeschwindigkeit (V) zwischen dem Aufzeichnungsträger und dem Magnetkopf einstellt, die bei einer niedrigen Zeichendichte größer ist als bei einer höheren Zeichendichte.

2. Magnetschichtspeicher nach Anspruch 1, dadurch gekennzeichnet, daß die Daten mit zwei unterschiedlichen Zeichendichten auf dem Aufzeichnungsträger (MB) speicherbar sind und daß die Relativgeschwindigkeiten (V) derart eingestellt werden, daß die Produkte aus der jeweiligen Relativgeschwindigkeit (V) und der jeweiligen Zeichendichte möglichst einander zumindest angenähert sind.

3. Magnetschichtspeicher nach Anspruch 1 oder Anspruch 2, dadurch gekennzeichnet, daß als Aufzeichnungsträger (MB) ein Magnetband vorgesehen ist, dessen Bandgeschwindigkeit (V) in Abhängigkeit von der Zeichendichte umschaltbar ist.

4. Magnetschichtspeicher nach Anspruch 1 oder Anspruch 2, dadurch gekennzeichnet, daß als Aufzeichnungsträger eine Magnetplatte vorgesehen ist, deren Umdrehungszahl in Abhängigkeit von der Zeichendichte umschaltbar ist.

5. Magnetschichtspeich nach einem der Ansprüche 1 bis 3, dadurch gekennzeichnet, daß die Daten auf dem Aufzeichnungsträger (MB) wahlweise nach dem an sich bekannten GCR-Aufzeichnungsverfahren mit einer Zeichendichte von 246 Zeichen/mm oder nach dem an sich bekannten PE-Aufzeichnungsverfahren mit einer Zeichendichte von 63 Zeichen/mm aufgezeichnet werden und daß bei der Verwendung des GCR-Verfahrens bzw. des PE-Verfahrens eine Bandgeschwindigkeit (V) von 0,635 m/s bzw. 1,905 m/s durch die Gerätesteuerung (GS) eingestellt wird.

6. Magnetschichtspeicher nach einem der Ansprüche 1 bis 5, dadurch gekennzeichnet, daß die Einstellung der jeweiligen Relativgeschwindigkeit (V) selbsttätig unter Verwendung von auf dem Aufzeichnungsträger (MB) aufgezeichneten Kennungen erfolgt.

7. Magnetschichtspeicher nach einem der Ansprüche 1 bis 6, dadurch gekennzeichnet, daß die Einstellung der Relativgeschwindigkeit (V) durch Festlegung des Aufzeichnungsverfahrens von einer zentralen Recheneinheit (ZE) aus über eine Steuereinheit (ST) erfolgt.

## Claims

1. Control device for a magnetic layer storage device (M), in which digital data (e. g. W2) can be stored using a writing unit (SE) with different character densities on a moved magnetic recording medium (MB), and the data (e. g. R2) can be read from the recording medium using a reading unit (LE), the control data (D1, D2 or D3) indicating the character density being transferred, inter alia, for initiating write or read operations, and in which a device controller (GS) is provided which controls at least one drive motor (AM) that moves the recording medium relative to a magnetic head (K), characterized by a switchover unit (UM) that automatically sets, when read or write operations are initiated, a relative speed (V) between the recording medium and the magnetic head, depending on the control data indicating the character density and employing the device controller (GS), which speed is greater for a lower character density than for a higher character density.

2. Magnetic layer storage device according to Claim 1, characterized in that the data can be stored on the recording medium (MB) with two different character densities, and in that the relative speeds (V) are set in such a manner that the products of the respective relative speed (V) and the respective character density are at least approximated to one another if at all possible.

3. Magnetic layer storage device according to Claim 1 or Claim 2, characterized in that there is provided as recording medium (MB) a magnetic tape, the tape speed (V) of which can be switched over depending on the character density.

4. Magnetic layer storage device according to Claim 1 or Claim 2, characterized in that there is provided as recording medium a magnetic disk, the rotational speed of which can be switched over depending on the character density.

5. Magnetic layer storage device according to one of Claims 1 to 3, characterized in that the data are recorded on the recording medium (MB) optionally either according to the GCR recording method known per se with a character density of 246 characters/mm, or according to the PE recording method known per se with a character density of 63 characters/mm, and in that a tape speed (V) of 0.635 m/s or 1.905 m/s is set by the device controller (GS) when the GCR method or the PE method is used, respectively.

6. Magnetic layer storage device according to one of Claims 1 to 5, characterized in that the respective relative speed (V) is automatically set using codes recorded on the recording medium (MB).

7. Magnetic layer storage device according to one of Claims 1 to 6, characterized in that the relative speed (V) is set via a control unit (ST) as a result of specification of the recording method by a central processing unit (ZE).

**Revendications**

1. Dispositif de commande pour une mémoire (M) à couche magnétique, dans laquelle des données numériques (par exemple W2) peuvent être mémorisées à des densités de caractères différentes sur un support d'enregistrement magnétique (MB) déplacé, à l'aide d'une unité d'écriture (SE), et dans laquelle les données (par exemple R2) peuvent être lues sur le support d'enregistrement à l'aide d'une unité de lecture (LE), dispositif de commande dans lequel, pour déclencher des opérations d'écriture ou de lecture, sont transmises des données de commande (D1, D2 ou D3) caractérisant notamment la densité de caractères, et dans lequel est prévue une commande d'appareil (GS) qui commande au moins un moteur d'entraînement (AM), lequel déplace le support d'enregistrement par rapport à une tête magnétique (K), caractérisé en ce qu'il comprend une unité de commutation (UM) qui, à l'enclenchement d'opérations de lecture ou d'écriture, ajuste automatiquement une vitesse relative (V) entre le support d'enregistrement et la tête magnétique en fonction des données de commande caractérisant la densité de caractères, avec utilisation de la commande d'appareil (GS), vitesse relative qui est plus élevée à une faible densité de caractères qu'à une densité de caractères plus grande.

2. Mémoire à couche magnétique selon la revendication 1, caractérisée en ce que les données peuvent être enregistrées sur le support d'enregistrement (MB) à deux densités de caractères différentes et que les vitesses relatives (V) sont ajustées de manière que les produits de la vitesse relative (V) et de la densité de caractères soient au moins approchés autant que possible l'un de l'autre.

3. Mémoire selon la revendication 1 ou 2, caractérisée en ce que le support d'enregistrement (MB) est une bande magnétique dont la vitesse de défilement (V) peut être commutée à différentes valeurs en fonction de la densité de caractères.

4. Mémoire selon la revendication 1 ou 2, caractérisée en ce que le support d'enregistrement est un disque magnétique dont la vitesse de rotation est commutable à différentes valeurs en fonction de la densité de caractères.

5. Mémoire selon une des revendications 1 à 3, caractérisée en ce que les données sont enregistrées sur le support d'enregistrement (MB), au choix, selon le procédé d'enregistrement (GCR) connu, à une densité de caractères de 246 caractères/mm ou selon le procédé d'enregistrement (PE) connu, à une densité de 63 caractères/mm et que, lors de l'utilisation du procédé (GRC) ou du procédé (PE), la vitesse de défilement (V) de la bande est ajustée respectivement à 0,635 m/s ou à 1,905 m/s par la commande d'appareil (GS).

6. Mémoire selon une des revendications 1 à 5, caractérisée en ce que l'ajustement de la vitesse relative (V) s'effectue automatiquement, avec utilisation d'identifications enregistrées sur le support d'enregistrement (MB).

7. Mémoire selon une des revendications 1 à 6, caractérisée en ce que l'ajustement de la vitesse relative (V) s'effectue, par la détermination du procédé d'enregistrement, à partir d'une unité de calcul centrale (ZE) à travers une unité de commande (ST).